# EUROPEAN PATENT APPLICATION

(11) **EP 1 729 394 A1**
(43) Date of publication of application: **06.12.2006**
(21) Application number: 05104776.9
(22) Date of filing: 02.06.2005
(51) Int. Cl.: H02J 7/00

(54) **Method and device for charging a battery**

(71) Applicant: Sony Ericsson Mobile Communications AB, 221 88 Lund (SE)
(72) Inventor: Ambrus, Alexander, 253 60 Helsingborg (SE); Wolf, Mats, 247 35 Södra Sandby (SE)
(74) Representative: Lindberg, Olle Nils Olof

(57) **Abstract**

Device and method for charging a battery, the method comprising the steps of: supplying, in a first step (21), a charging current to the battery at a first current level for a first time period; supplying the charging current in one or more successive steps (22,23) subsequent to the first time period, wherein the current level of each step is lower than the current level of the foregoing step and maintained for each one time period; and terminating the supply of the charging current to the battery when a charging criteria is reached. Preferably, a charging sequence from zero to full charge of the battery is divided into a predetermined number of steps at stepwise descending charging current levels, wherein the time period of each step, and therefore also the full sequence, has a predetermined duration.

## Description

### Field of the invention

The present invention relates to a method and a device for charging batteries. In particular, the invention is applicable for charging lithium ion or lithium polymer battery cells, which are suitable to use as power supply in portable electronic apparatuses.

### Background

Lithium-based battery cells have found application in electronic devices, particularly portable devices, since the batteries demonstrate higher performance than e.g. the nickel metal-hydride batteries. Lithium-based secondary battery cells have a high energy density, and have therefore widely become used in order to increase the battery usable or operable time. In particular, lithium-based battery cells have been found useful in devices such as mobile phones, laptop computers and personal digital assistants PDAs. An example of such a lithium-based battery cell is a lithium-ion cell, and another lithium-based battery type having an even higher energy density is the lithium-polymer cell.

Lithium-based battery cells are unforgiving to overcharge. An overcharged lead acid battery will electrolyse some easily replaced water, and sealed nickelcadmium or metal-hydride batteries have voltages which stop rising at full charge, but the voltage of the lithium ion and lithium polymer battery cell continues to rise even while being overcharged. The voltage of a lithium ion battery cell rises quite distinctly at the end of charge. One characterising feature with the lithium-based cells is that these battery cells will not stand such overcharging, and consequently overcharging must be avoided. Overcharging can be visualised as depleting too many of the lithium ions off of the positive electrode. Upon overcharging performance degradation occurs.

A way of overcoming the risk for overcharging, with resulting damage to the battery cell, has been to use a two-step charging process known as Constant Current Constant Voltage CC-CV. Usually, the constant voltage CV of a lithium cell is 4.2 V. With the CC-CV method, the battery cell is first charged with a constant current until the voltage in the cell reaches 4.2 V. Once this level has been reached, a charging control system regulates the charging of the cell at 4.2 V in the subsequent step, and proceeds with the charging until the charging current has dropped to a predetermined current value. Once the predetermined current level has been detected or a given time limit has been reached, the cell is assumed to be fully charged.

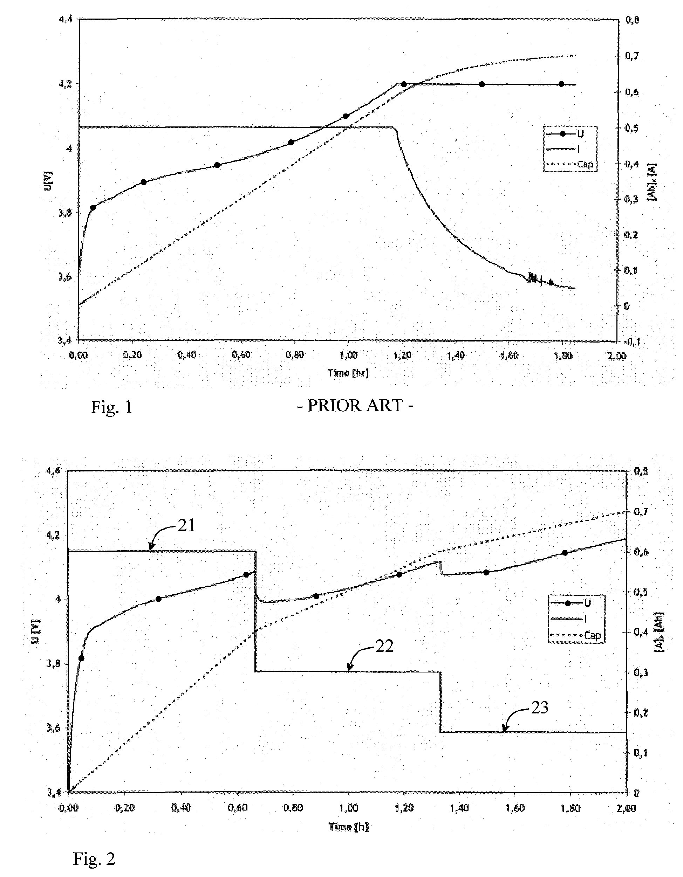

Fig. 1 illustrates schematically a prior art charging algorithm for a 700 mAh battery. The charging current is initially held at a Constant Current level of 0.5 A, during which the battery voltage rises. Once the battery voltage has reached the target voltage of 4.2 V, this target Constant Voltage is maintained until the charging current has dropped to a preset value of 50 mA, at which charging is terminated. The flicker in the charging current at the end of the CV phase is caused by the equipment during voltage regulation. The charge in the battery rises basically linearly during the CC phase, and then more slowly during the CV phase to asymptotically reach full capacity.

However, lithium-based battery cells are not only sensitive to overcharging, they are sensitive to high voltage storing and charging as such. This means that the longer the battery is on high voltage the more it will deteriorate in cycle life. One attempt to overcome this problem has been to simply lower the CV to e.g. 4.1 V. On the other hand, with such a solution the capacity of the battery cell will inevitably decrease, due to the lower charging voltage.

A problem with the charging according to the CC-CV method is that the current decreases exponentially during the CV phase, wherein the current decreases at a slower rate the closer it gets to the predetermined value. This means that the battery cell will be held at a high voltage during a prolonged time, during which damage may be caused to the cell. An effect of the current-controlled charging process time is that a higher charge will be applied in the first cycles of the battery cell life. The battery cell also ages faster in the beginning of its battery life, and in a later stage of the battery life, a smaller charge will be transmitted to the cell when using the same current control procedure. Accordingly, this results in shorter battery time between charging, as the battery cell gets older. Furthermore, once the CV mode has been entered and the current starts to drop to fully charge the battery, the method does not provide an accurate charging time.

Consequently, there is still a need for improvements in the art of battery cells that are sensitive to high voltage, satisfying the market demands on cycle life and high capacity, i.e. battery time, as well a easy handling.

### Summary of the invention

Hence, it is an object of the present invention to overcome the above-identified deficiencies related to the prior art.

According to a first aspect, this object is fulfilled by a method for charging a battery, comprising the steps of:
- supplying, in a first step, a charging current to the battery at a first current level for a first time period;
- supplying the charging current in one or more successive steps subsequent to the first time period, wherein the current level of each step is lower than the current level of the foregoing step and maintained for each one time period;
- terminating the supply of the charging current to the battery when a charging criteria is reached.

In one embodiment, the first time period has a predetermined duration.

In one embodiment, a charging sequence from zero to full charge of the battery is divided into a predetermined number of steps at stepwise descending charging current levels, wherein the time period of each step has a predetermined duration.

In one embodiment, the charging criteria is reached when the duration for a last of said steps has lapsed.

In one embodiment, the method comprises the steps of:
- measuring a parameter value, which is representative of a present charge level in the battery, prior to supplying the charging current;
- determining the step at which to begin charging, and the duration for which to maintain the current level of that step, dependent on the present charge level.

In one embodiment, the method comprises the step of:
- calculating the charge time by adding the determined duration with the predetermined duration of each subsequent step.

In one embodiment, the method comprises the step of:
- presenting the calculated charge time on a display.

In one embodiment, the method comprises the step of:
- retrieving the determined current level value and duration from a look-up table, using measured parameter value prior to charging as input data

In one embodiment, the method comprises the steps of:
- monitoring a voltage in the battery;
- terminating the supply of the charging current to the battery when the voltage has reached a preset level.

According to a second aspect, the object of the invention is fulfilled by a device for charging a battery, comprising a charging controller, a current supply unit devised to selectively supply a charging current from a power source to the battery, and a current level setting unit devised to set the charging current level under control by the charging controller, wherein the current level setting unit is controlled to set the charging current supplied to the battery to a first current level for a first time period, and to set the charging current in one or more successive steps subsequent to the first time period, such that the current level of each step is lower than the current level of the foregoing step and maintained for each one time period, wherein the current supply unit is controlled to terminate the supply of the charging current to the battery when a charging criteria is reached.

In one embodiment, the first time period has a predetermined duration.

In one embodiment, a charging sequence from zero to full charge of the battery is divided into a predetermined number of steps at stepwise descending charging current levels, wherein the time period of each step has a predetermined duration.

In one embodiment, the charging criteria is reached when the duration for a last of said steps has lapsed.

In one embodiment, the device comprises a parameter measuring mechanism, devised to measure a parameter value which is representative of a present charge level in the battery prior to supplying the charging current, wherein the charging controller is devised to determine the step at which to begin charging, and the duration for which to maintain the current level of that step, dependent on the present charge level.

In one embodiment, the device comprises a calculator mechanism devised to calculate the charge time by adding the determined duration with the predetermined duration of each subsequent step.

In one embodiment, the device comprises a display function devised to present the calculated charge time on a display.

In one embodiment, the device comprises a memory holding current level value data and duration data, associated with value data of said parameter in a look-up table, and a data retrieving mechanism devised to retrieve the determined current level value and duration from the memory using the measured parameter value prior to charging as input data.

In one embodiment, the device comprises a battery voltage monitoring mechanism, wherein the charging criteria is reached when the battery voltage has reached a preset level.

### Brief description of the drawings

The present invention will now be described in more detail with reference to preferred embodiments, given only by way of example and illustrated in the accompanying drawings, in which:
Fig. 1 schematically illustrates a diagram showing voltage, current and capacity for a 700 mAh battery when charged according to a prior art CC-CV algorithm.
Fig. 2 schematically illustrates a diagram showing capacity, voltage and charging current for a charging algorithm according to an embodiment of the invention; and
Fig. 3 schematically illustrates an exemplary embodiment of a device for charging a battery, according to the invention.

### Detailed description of preferred embodiments

The present description refers to battery cells for use with electronic equipment, such as communication or data processing terminals. One type of communication terminal for which the invention is suitable is portable radio communication terminals, such as mobile phones. However, the invention is applicable to many types of electronic devices, particularly portable electronic devices, such as pagers, communicators, electronic organisers, smartphones, PDA:s (Personal Digital Assistants), laptop computers, and so on. Furthermore, it should be emphasised that the term comprising or comprises, when used in this description and in the appended claims to indicate included features, elements or steps, is in no way to be interpreted as excluding the presence of other features elements or steps than those expressly stated.

According to the invention, a new charge algorithm is proposed which does not use the CV mode. Instead, a stepwise descending CC mode is suggested, thereby supplying different charging current levels until the battery is fully charged. Preferably the charging procedure starts with supply of a maximum charging current to the battery, at least if the battery is empty or near empty, and the charging current subsequently decreases in intervals. The specific current level magnitude and duration of each step or interval, and the number of steps used, is typically tried out for each specific battery type, such that a suitable charging scheme is obtained while avoiding high voltage charging.

In one embodiment the charging sequence from zero to full charge of the battery is divided into a predetermined number of steps, at stepwise descending charging current levels, wherein the time period of each step has a predetermined duration. Once the last step is fulfilled, i.e. when the duration of the finally maintained current level lapses, charging is terminated. The charging criteria is consequently charging time. For a given type of battery, the levels and durations are therefore preset such that full capacity will be reached after the final step. However, the exact capacity obtained after the full sequence may of course vary to some extent dependent on e.g. temperature.

In another embodiment, a number of successive charging steps are preset with predetermined durations, whereas a last charging step is maintain until another charging criteria is met, namely battery voltage. For this embodiment, the battery voltage therefore has to be monitored during the charging sequence.

Fig. 2 illustrates schematically a charging sequence according to the algorithm of an embodiment of the present invention. The drawing illustrates measurements made of charging parameters on a 700 mAh Li-based battery, in which three successive constant current steps are included. Charging is performed from zero capacity in the battery. The first step is 21 is performed at a first current level of 600 mA, for a first duration of about 40 minutes. Once the first step has lapsed, the charging current is lowered to a second current level of 300 mA in the second step 22, at which level the charging continues for a second duration, which in this case is also 40 minutes. After the second step, the third and last charging step 23 is performed at a third charging current level of 150 mAh for a third duration of another 40 minutes. As for the prior art CC sequence according to Fig. 1, the charge rises basically linearly during each CC step. The slope of the charge or capacity line represents the charge rate, which is substantially proportional to the magnitude of the CC level of each step. Fig. 2 illustrates an embodiment in which the current level magnitude of each subsequent step 22 and 23 is half the current level magnitude of its preceding step 21 and 22, respectively, which is a current level division which has provided good charging results. Another way of dividing the steps is to decrease the charging current level by one and the same fixed amount between each two steps, e.g. 200 mAh. There may also be more than three steps and levels, such as four or five, and even only two steps and levels, in the charging algorithm according to the invention.

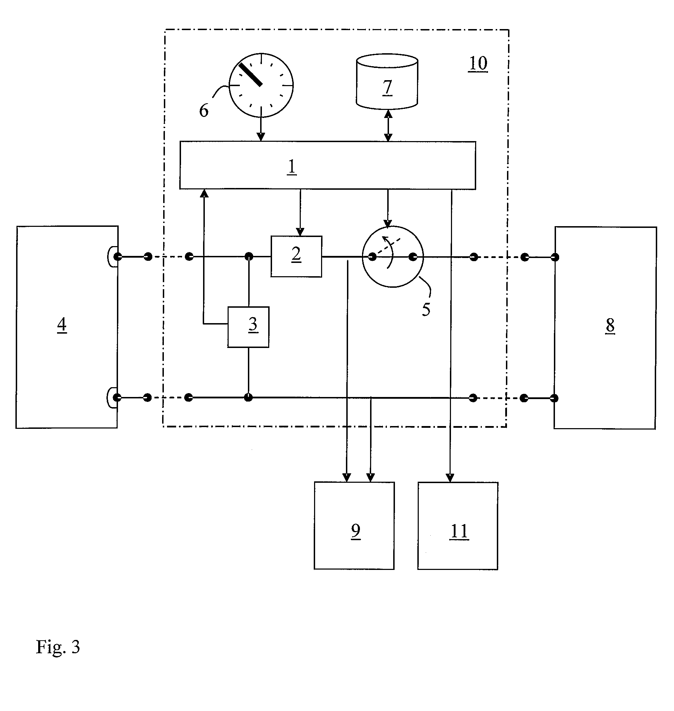

Fig. 3 illustrates an embodiment of a device 10 for charging a battery according to an embodiment of the invention. It should be stressed that the elements of the drawing are illustrated as functional items with communicative interconnections, but that they do not necessarily represent physical entities. Means for calculating and controlling a process or device may be realised in hardware, but may also in many cases be realised by a microprocessor system with associated software. The present invention may thus include both hardware and software. The device for controlling charging of a battery cell is preferably implemented in an electronic device, such as a mobile phone. Alternatively, the device may be contained in a casing carrying the battery. Another alternative is to implement the device in a charger, which is connectable to a power supply, such as a mains outlet.

Fig. 3 illustrates a battery cell 4, which can be Li-Ion or Li polymer, having two poles. As is indicated by the dashed lines to the left in the drawing, the battery cell 4 is connectable to the device 10 for charging the battery cell 4. At the other end, a power supply 8 is depicted, which may be a battery cell charger connectable to an electronic apparatus carrying the device and the battery cell 4. Power supply 8 consequently supplies the device 10 for charging the battery cell 4 with electrical energy. Electronic circuitry 9 is connected to make use of battery 4, said electronic circuitry preferably forming part of an electronic apparatus, such as a mobile phone.

When charging the battery cell 4, a stepwise descending algorithm according to the invention is used. A charging current supply unit is included in the form of a switch 5, which can be set to a closed state for passing a charging current from the power supply 8 to the battery 4, or to an open state for breaking the charging connection to the battery cell 4. A current level setting unit 2 is connected to at least one of the battery pole connections. A voltage measuring or monitoring device 3 may optionally be included for sensing the voltage over the battery cell 4, as will be described. The current supply unit 5 and the current level setting unit 2 operate under control by a charging controller 1, which is typically realised in the form of a microprocessor system with associated memory and charging control software. Charging controller 1 is arranged to operate with a charging algorithm in accordance with the invention, and is thereby devised to control current level setting unit 2 to set the charging current supplied to battery 4 to a first current level for a first time period. The duration of the first time period is preset, and a clock unit 6 is used to determine when the first time period has lapsed. After the first time period, charging controller 1 is devised control current level setting unit 2 to decrease the charging current supplied from power supply 8. Thereby, the charging current is set, in at least one subsequent second step, to a second current level, which is lower than first current level of the first step. In this second step, the second current level is maintained for a second time period, having a duration which may be different from or equally long as the duration of the first time period.

In a very basic embodiment, the charging algorithm employed by charging controller 1 comprises only the first and second steps. Charging controller 1 controls current supply unit 5 to terminate the supply of the charging current to battery 4 when a charging criteria is reached. In one variant of this basic embodiment, the duration of the second and last time period is also preset, and lapse of that second time period constitutes the charging criteria. Once charging controller 1 detects, by means of clock unit 6, that the second time period has lapsed, switch 5 is controlled to break the current supply to battery 4. In another variant of this basic embodiment, a battery voltage monitoring mechanism 3 is connected to sense the voltage over the poles of battery 4 during charging. The charging criteria for this variant is battery voltage, more specifically a target battery voltage level. For a Li-based battery cell the charging criteria may be 4.2 or 4.3 V. When charging controller 1 detects that the target battery voltage level has been reached, switch 5 is controlled to break the current supply to battery 4. In this variant of the embodiment, the second and last step has a non-fixed duration. wherein the charging criteria is reached when the battery voltage has reached a preset level.

In a preferred embodiment, using a charging algorithm corresponding to that of Fig. 2, charging controller 1 is set to provide the charging current in two or more subsequent steps after the first step, wherein the current level of each of these subsequent step is lower than the current level of the foregoing step. Each step is further maintained for each one time period, the duration of which may be the same or different from each other. Preferably, the charging sequence from zero to full charge of battery 4 is divided into a predetermined number, two three or more, of steps at stepwise descending charging current levels, wherein the time period of each step has a predetermined duration. The charging criteria is thereby set to be met when the duration for the last step has lapsed. This means easy implementation, and also a basis for always being able to calculate how much time remains before full charging is completed. If the battery is charged from zero capacity, the charging time is simply the aggregate time of all steps included in the charging algorithm.

If the capacity present in battery 4 prior to charging is more than zero, which may often be the case, one alternative is to begin by discharging the battery and then charging from zero charge. In another embodiment, charging is instead performed from the present capacity level. In such a case, it has to be determined how much charge the battery holds, in order to determine where in the charging algorithm to begin charging. For this purpose, the device preferably includes a parameter measuring mechanism, devised to measure the value of a parameter which is representative of a present charge level in the battery, prior to supplying the charging current. Typically, the parameter measuring mechanism is a voltage measuring unit 3, connected to measure the voltage of the battery 4 prior to charging. The present capacity of the battery 4 can de deduced from a look-up table stored in a memory 7, connected to the charging controller 1. By means of the actual present capacity, or the measured voltage level, the charging controller is devised to determine the step at which to begin charging, and also the duration for which to maintain the current level of that step.

Preferably, memory 7 holds current level value data and duration data, associated with parameter value data in a look-up table, such that input of a parameter value will indicate one specific current level value and an associated duration for maintaining that current level value. The parameter value may be the measured voltage level prior to charging, or the present charge level of battery 4 as calculated dependent on the measured voltage. The current level value and associated duration may be determined by a mathematical function using the parameter value as input. Preferably, though, parameter ranges are preset to point towards different current levels. As one example, if the determined parameter value indicates that the capacity of battery 4 is between zero and 60% of full capacity, charging shall commence at the first step of the charging algorithm; if the present capacity is between 60 and 90%, charging shall commence at the second step; and if the present capacity is between 90 and 100%, charging shall commence at a third and last step. Within each capacity range, different durations of the associated step may be employed for the initial charging step. As an example for the range of 0-60% capacity, indicating that charging shall commence with the first step as the initial charging step, the duration for the initial step may be selectively set to one of a number of options. For instance, if the present capacity is determined to be 0-20 %, the full duration of the time period of the first charging step is to be used; for 20-60% only two thirds of the duration of the first period is to be used; and for 60-100% only one third of the duration is to be used. As an alternative, a more specific duration may be calculated for which to maintain the current level of the step indicated from the present capacity, using a mathematical formula describing the dependence of charge as a function of time, and solving that formula for obtaining a calculated duration value from the detected charge level. As evidence by Fig. 2, the charge as a function of time is a straight sloping line for any constant current charging step, where C = k*t + C₀. Here, C is charge level, k is charge rate, which is a substantially constant value for each current level, t is charging time from beginning of the specific charging step, and C₀ is the charge at the beginning of that step. If T is used to denote the duration of a specific charging step in the algorithm, then the time ΔT to maintain the indicated current level dependent on the determined charge level C, can be calculated as ΔT = T - (C-C₀)/k. The total time for charging the battery to full capacity can therefore be calculated by means of a calculator mechanism, comprised in or realised by charging controller 1, as ΔT plus the aggregated duration for all steps subsequent to the initial step.

In a preferred embodiment, both the charging level and the duration ΔT for which to apply that level, are pre-calculated and stored in a look-up table in memory 7, where these data may be retrieved using determined present capacity as input data. A data retrieving mechanism of charging controller 1 is therefore devised to retrieve the determined current level value and duration from the memory using the measured parameter value, either present capacity or battery voltage, prior to charging as input data.

In a preferred embodiment, charging controller 1 includes a display function devised to present the calculated charge time on a display 11. Display 11 typically forms part of an electronic apparatus incorporating electronic circuitry 9 and the device 10 for charging battery 4, e.g. a mobile phone or a computer.

A general merit of the invention as described, is that charging at high voltage is minimised, the proposed algorithm thereby causing less damage to the battery than the prior art CC-CV algorithm. Furthermore, the embodiment in which the total charging sequence is divided into a predetermined number of constant current steps has the benefit of the total charging time, and therefore also the charging time left to full capacity, is always known and may be presented to a user. The implementation of such an algorithm is also simpler than the prior art algorithm according to CC-CV.

The foregoing has described the principles, preferred embodiments and modes of operation of the present invention. However, the invention should not be construed as being limited to the particular embodiments discussed above, which should be regarded as illustrative rather than restrictive. It should therefore be appreciated that variations may be made in those embodiments by workers skilled in the art without departing from the scope of the present invention, as defined by the appended claims.

## Claims

1. Method for charging a battery, comprising the steps of:
- supplying, in a first step (21), a charging current to the battery at a first current level for a first time period;
- supplying the charging current in one or more successive steps (22,23) subsequent to the first time period, wherein the current level of each step is lower than the current level of the foregoing step and maintained for each one time period;
- terminating the supply of the charging current to the battery when a charging criteria is reached.

2. The method as recited in claim 1, wherein the first time period has a predetermined duration.

3. The method as recited in claim 1, wherein a charging sequence from zero to full charge of the battery is divided into a predetermined number of steps at stepwise descending charging current levels, wherein the time period of each step has a predetermined duration.

4. The method as recited in claim 3, wherein the charging criteria is reached when the duration for a last of said steps has lapsed.

5. The method as recited in claim 1, comprising the steps of:
- measuring a parameter value, which is representative of a present charge level in the battery, prior to supplying the charging current;
- determining the step at which to begin charging, and the duration for which to maintain the current level of that step, dependent on the present charge level.

6. The method as recited in claim 3 and 5, comprising the step of:
- calculating the charge time by adding the determined duration with the predetermined duration of each subsequent step.

7. The method as recited in claim 6, comprising the step of:
- presenting the calculated charge time on a display.

8. The method as recited in claim 5, comprising the step of:
- retrieving the determined current level value and duration from a look-up table, using measured parameter value prior to charging as input data

9. The method as recited in claim 1, comprising the steps of:
- monitoring a voltage in the battery;
- terminating the supply of the charging current to the battery when the voltage has reached a preset level.

10. Device (10) for charging a battery (4), comprising a charging controller (1), a current supply unit (5) devised to selectively supply a charging current from a power source to the battery, and a current level setting unit (2) devised to set the charging current level under control by the charging controller, **characterised in that** the current level setting unit is controlled to set the charging current supplied to the battery to a first current level for a first time period, and to set the charging current in one or more successive steps subsequent to the first time period, such that the current level of each step is lower than the current level of the foregoing step and maintained for each one time period, wherein the current supply unit is controlled to terminate the supply of the charging current to the battery when a charging criteria is reached.

11. The device as recited in claim 10, wherein the first time period has a predetermined duration.

12. The device as recited in claim 10, wherein a charging sequence from zero to full charge of the battery is divided into a predetermined number of steps at stepwise descending charging current levels, wherein the time period of each step has a predetermined duration.

13. The device as recited in claim 12, wherein the charging criteria is reached when the duration for a last of said steps has lapsed.

14. The device as recited in claim 10, comprising a parameter measuring mechanism (3), devised to measure a parameter value which is representative of a present charge level in the battery prior to supplying the charging current, wherein the charging controller is devised to determine the step at which to begin charging, and the duration for which to maintain the current level of that step, dependent on the present charge level.

15. The device as recited in claim 12 and 14, comprising a calculator mechanism devised to calculate the charge time by adding the determined duration with the predetermined duration of each subsequent step.

16. The device as recited in claim 15, comprising a display function devised to present the calculated charge time on a display (11).

17. The device as recited in claim 14, comprising a memory (7) holding current level value data and duration data, associated with value data of said parameter in a look-up table, and a data retrieving mechanism devised to retrieve the determined current level value and duration from the memory using the measured parameter value prior to charging as input data.

18. The device as recited in claim 10, comprising a battery voltage monitoring mechanism (10), wherein the charging criteria is reached when the battery voltage has reached a preset level.
